(19)

Europäisches
Patentamt
European
Patent Office
Office européen
des brevets

(11) **EP 3 936 936 A1**

(12) **EUROPEAN PATENT APPLICATION**

(43) Date of publication:
**12.01.2022 Bulletin 2022/02**

(51) Int Cl.:
**G02F 1/355** (2006.01)     **G02F 1/383** (2006.01)

(21) Application number: **20184730.8**

(22) Date of filing: **08.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ASML Netherlands B.V.**
**5500 AH Veldhoven (NL)**

(72) Inventors:
• **ABDOLVAND, Amir**
  **5500 AH Veldhoven (NL)**
• **CRAUS, Cristian, Bogdan**
  **5500 AH Veldhoven (NL)**
• **EZERSKAIA, Anna**
  **5500 AH Veldhoven (NL)**

(74) Representative: **ASML Netherlands B.V.**
**Corporate Intellectual Property**
**P.O. Box 324**
**5500 AH Veldhoven (NL)**

(54) **HOLLOW-CORE PHOTONIC CRYSTAL FIBER BASED BROADBAND RADIATION GENERATOR WITH EXTENDED FIBER LIFETIME**

(57)     Disclosed is a broadband light source device, being configured for generating a broadband output upon receiving pump radiation, comprising: an optical component, comprising: a hollow-core photonic crystal fiber (HC-PCF) ; and a gas mixture filling said HC-PCF, wherein said gas mixture comprises a mixture of a first gas configured for the generation of broadband radiation and at least one second gas, different from the first gas, configured to improve thermal conductivity of said gas mixture and/or provide acoustic damping of shock waves initiated during said generation of broadband radiation, further wherein said second gas comprises or consists of: i) an atomic gas having a smaller atomic weight than said first gas; and/or ii) a molecular gas providing no more than 10 parts-per-million (ppm) Hydrogen in mole fraction to the gas mixture.

EP 3 936 936 A1

## Description

FIELD

The present invention relates to a hollow-core photonic crystal fiber based broadband radiation generator, and in particular such a broadband radiation generator in relation to metrology applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k1 lithography may be used to process features with dimensions smaller than the classical resolution limit of a lithographic apparatus. In such process, the resolution formula may be expressed as $CD = k_1 \times \lambda / NA$, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation.

SUMMARY

In a first aspect of the invention there is provided a broadband light source device, being configured for generating a broadband output upon receiving pump radiation, comprising: an optical component, comprising: a hollow-core photonic crystal fiber (HC-PCF) and a gas mixture filling the HC-PCF; wherein the gas mixture comprises a mixture of at least one first gas configured for the generation of broadband radiation and at least one second gas configured to improve thermal conductivity of the gas mixture and/or provide acoustic damping of shock waves initiated during the generation of broadband radiation, further wherein the gas mixture comprises no more than 10 parts-per-million (ppm) Hydrogen in mole fraction.

In a second aspect of the invention there is provided a method for configuring a source arrangement configured for generating a broadband radiation output and comprising: a pump radiation source for outputting pump radiation; a hollow-core photonic crystal fiber (HC-PCF) and a gas mixture filling the HC-PCF, wherein the method comprises: substantially matching an optimal acoustic damping frequency of the gas medium to a repetition rate of the pump radiation generated by the pump radiation source.

In a third aspect of the invention there is provided a method for configuring a source arrangement configured for generating a broadband radiation output and comprising: a pump radiation source for outputting pump radiation; a hollow-core photonic crystal fiber (HC-PCF) and a gas mixture filling the HC-PCF, wherein the method comprises: optimizing the repetition rate of the pump radiation such that it is unmatched to any of the acoustic resonance frequencies of an inner cladding structure of the HC-PCF.

Other aspects of the invention comprise metrology device comprising the broadband light source device of the first aspect.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 schematically depicts the transverse cross-sections of the two HC-PCF designs for white light generation, including (a) Kagome design and (b) single-ring design;
- Figure 8 shows two cross-section images taken at two different locations of a HC-PCF with a single-ring design operated in a pure Krypton gas: (a) the cross-section image taken at the fiber end; (b) the cross-section image taken at a location a few centimeters away from the same fiber end.
- Figures 9 schematically depicts a gas filled HC-PCF based broadband light source device; and
- Figure 10 (a)-(c) schematically depicts examples of optical components in three different configurations.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

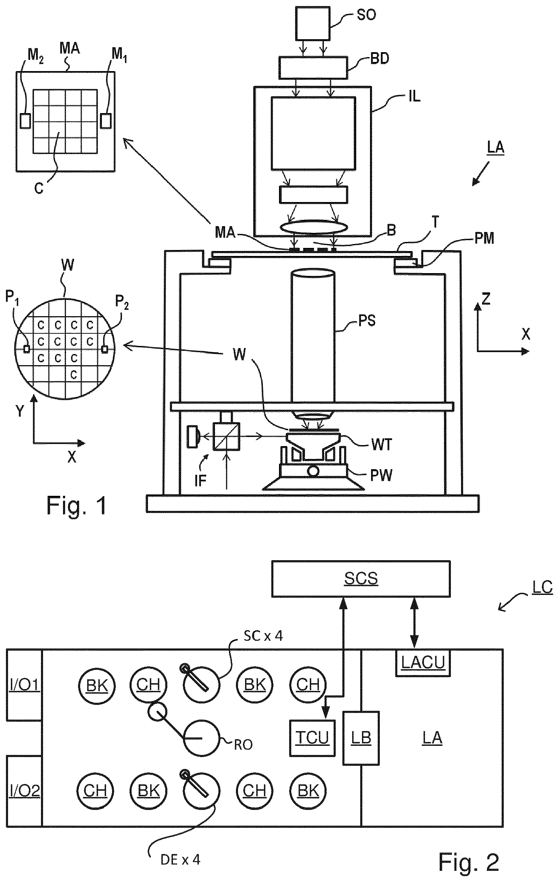

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/01, I/02, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

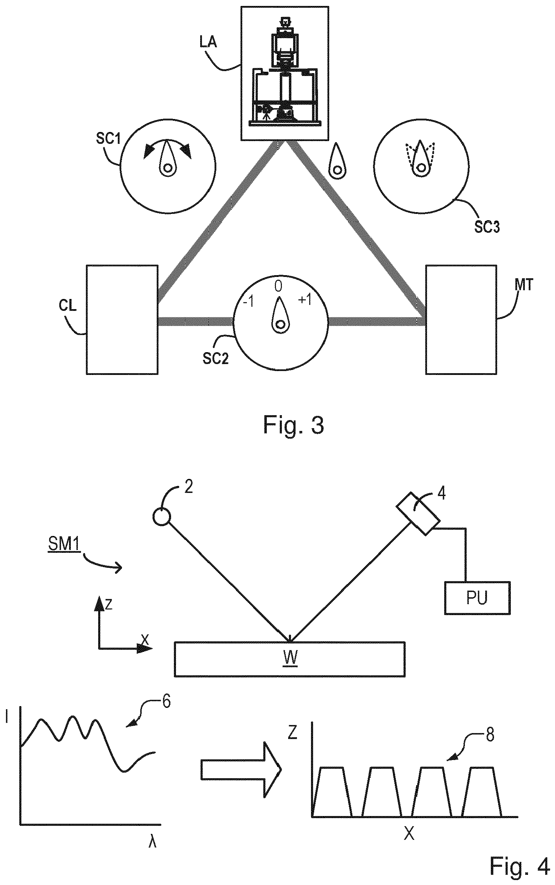

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

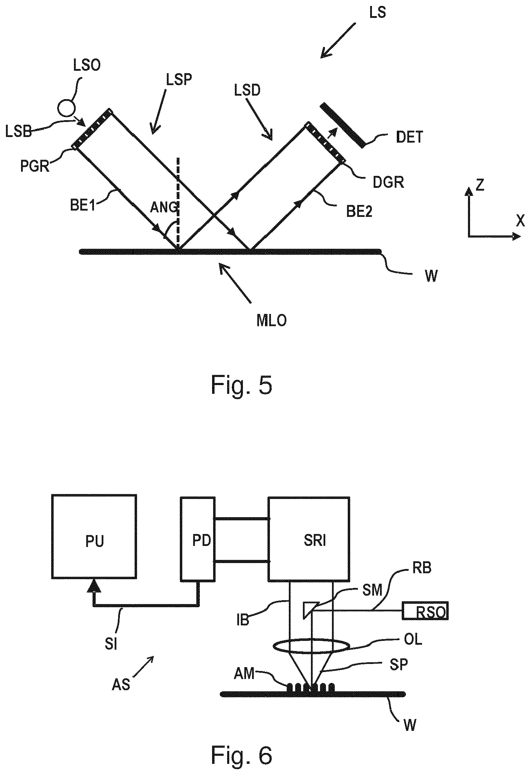

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

For optical semiconductor metrology, inspection applications, such as in any of the aforementioned metrology tools, a bright light source which outputs coherent radiation, simultaneously covering a broad wavelength range (e.g., from UV to IR), is often preferred. Such a broadband light source can help improve the flexibility and robustness of applications by allowing wafers with different material characteristics to be optically examined in the same setup/system without a need for any hardware change (e.g., changing a light source so as to have a specific wavelength). Allowing the wavelength to be optimized for a specific application also means that the accuracy of measurements can be further increased.

Gas lasers, which are based on the gas-discharge effect to simultaneously emit multiple wavelengths, can be used in these applications. However, intrinsic issues such as high intensity instability and low spatial incoherence associated with gas lasers can make them unsuitable. Alternatively, outputs from multiple lasers (e.g., solid-state lasers) with different wavelengths can be spatially combined into the optical path of a metrology or inspection system so as to provide a multiple wavelength source. The complexity and high implementation costs, which increases with the number of wavelengths desired, prevents such a solution from being widely used. In contrast, a fiber-based broadband or white light laser, also called a supercontinuum laser, is able to emit radiation with high spatial coherence and broad spectral coverage, e.g., from UV to IR, and therefore is a very attractive and practical option.

A hollow-core photonic crystal fiber (HC-PCF) is a special type of optical fiber that comprises a central hollow core region and an inner cladding structure surrounding the hollow core, both of which extend axially along the entire fiber. The light guidance mechanism is enabled by the inner cladding waveguide structure, which may comprise, for example, thin-walled glass elements. The radiation is thus confined predominantly inside a hollow core and propagates along the fiber in the form of transverse core modes.

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs).

HC-PCFs comprise hollow channels which are filled with a fluid, such that they possess resultant desired characteristics for various light guiding applications; for example, high-power beam delivery using HC-PBFs and gas-based white light generation (or supercontinuum generation) using HC-ARFs. Detail on the design and manufacture of HC-PCFs can be found in US patent US2004175085 (for HC-PBFs) and European patent application EP3136143A1 (for HC-ARFs), which are incorporated herein by reference. HC-PBFs are configured to offer low loss but narrow bandwidth light guidance via a photonic bandgap effect established by the cladding structure surrounding the central hollow core. Whereas, HC-ARFs are engineered to significantly broaden the transmission bandwidth via anti-resonant reflection of light from the cladding.

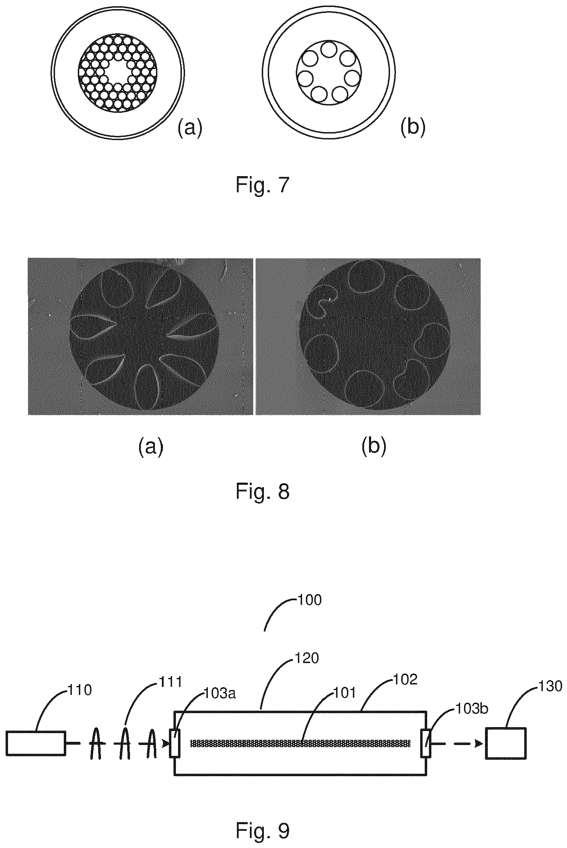

Figure 7 depicts in cross-section, two well-known types of HC-ARFs. Figure 7(a) shows a Kagome fiber, comprising a Kagome lattice structure. Figure 7(b) shows a single-ring or revolver fibers, where the hollow core region is formed and surrounded by a layer of non-touching rings.

For gas-based white light generation, a HC-ARF may be comprised within a gas cell, which is designed to operate, for example, at a pressure up to many 10s of bars (e.g., between 3-100 bar). A gas-filled HC-ARF can act as an optical frequency converter when being pumped by an ultrashort pump laser pulse with sufficient peak power. The frequency conversion from ultrashort pump laser pulses to broadband laser pulses is enabled by a complicated interplay of the dispersion and nonlinear optical processes inside the gas-filled fiber. The converted laser pulses are predominantly confined within the hollow core in the form of transverse core modes and guided to the fiber end. Part of the radiation, for example higher order transverse core modes or specific wavelengths, may leak from the hollow core through the inner cladding waveguide structure and undergoes strong attenuation during its propagation along the fiber. The core region and the cladding region of a HC-ARF can be configured such that the higher order core modes are phase matched to the higher order cladding modes. In this way, the higher order core modes can resonantly couple with the higher order cladding modes which subsequently get attenuated or suppressed. In such a manner, low loss and effectively single transverse mode transmission can be obtained in a broad spectral range.

The spatio-temporal transmission characteristics of a laser pulse, e.g. its spectral amplitude and phase, transmitted along a HC-PCF can be varied and tuned through adjustment of pump laser parameters, filling gas parameters and fiber parameters. Said transmission characteristics may include one or more of: output power, output mode profile, output temporal profile, width of the output temporal profile (or output pulse width), output spectral profile, and bandwidth of the output spectral profile (or output spectral bandwidth). Said pump laser parameters may include one or more of: pump wavelength, pump pulse energy, pump pulse width, pump pulse repetition rate. Said fiber parameters may include one or more of: fiber length, size and shape of the hollow core, size and shape of the cladding structure, thickness of the walls surrounding the hollow core. Said filling gas parameters may include one or more of: gas type, gas pressure and gas temperature.

The filling gas can be an atomic gas such as Argon, Krypton, and Xenon, a molecular gas such as Hydrogen, Deuterium and Nitrogen, or a gas mixture comprising two or more different gases, such as a mixture of Argon and Hydrogen, a mixture of Xenon and Deuterium, a mixture of Krypton and Nitrogen, or a mixture of Nitrogen and Hydrogen. Depending on the type of filling gas, the nonlinear optical processes can include modulational instability (MI), soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the gas cell pressure, the generated broadband pulse dynamics and the associated spectral broadening characteristics can be adjusted so as to optimize the frequency conversion. The generated broadband laser output can cover wavelengths from UV (e.g., <400 nm) to IR (e.g., >800 nm).

It has been found that existing HC-PCF based broadband sources tend to suffer from fiber lifetime issues and may fail to function after only a short period of operation time. In the case where a HC-PCF based light source is used in a metrology tool, e.g., a scatterometer, unexpected and early failures of a HC-PCF means the whole light source will need to be removed from the tool in order to be repaired or replaced. After a replacement light source is fitted into the same metrology tool, a complete optical alignment of the laser beam as well as other necessary calibrations and characterizations need to be carried out again. The whole process not only adds cost but also causes a significant system downtime. Hence it is highly desirable to fully understand the failure mechanisms of HC-PCFs so as to find ways to improve/extend their lifetime.

At present, several failure mechanisms have been identified. A first failure mechanism is fiber contamination typically induced by hydrocarbon deposition on one or both fiber ends. There are cleaning methods available to address this contamination.

A second failure mechanism is fiber overheating. This issue is mainly caused by the fact that existing HC-PCF based light sources have not incorporated any effective thermal management measure to maintain the operating temperature of HC-PCFs. White light generation is accompanied by ionization and heat generation through atomic collisions in gas species and recombination dynamics in plasma. Such heat generated during operation will increase the temperature of the inner cladding surfaces of a fiber. However, for existing HC-PCFs e.g., such as illustrated in Figure 7(a) or Figure (b)), fiber geometries do not allow access and efficient cooling of the surfaces of inner cladding waveguide structures. Without effective thermal dissipation, the generated heat will accumulate within the fiber, especially in the case of the fiber being pumped/driven with high repetition rate pulses, until the fiber is overheated and eventually damaged. Overheating of the surfaces of an inner cladding waveguide structure (e.g., glass or silica tubes such as illustrated in Figure 7(b)) will also trigger unwanted chemical reactions which can produce outgassing and thus cause contamination. Hence, the overheating issue negatively impacts fiber lifetime and imposes limitations on further development of HC-PCF based light sources, e.g., power and/or repetition rate scaling.

A third failure mechanism is fiber inner cladding deformation. In a pure atomic gas environment such as Krypton, broadband radiation or white light generation also causes mechanical deformation of the fiber cladding structure. As mentioned above, the white light generation process causes both fiber heating and plasma generation. It has been found that plasma generation in a HC-PCF under a short temporal profile causes a pressure shock wave due to sudden gas heating. This pressure change is proportional to the density of free electrons. The pressure wave, propagating as an acoustic wave in the cross-section of a HC-PCF, impinges on the thin-walled glass elements (e.g., cladding tubes) of the inner cladding waveguide structure and then impulsively excites several mechanical modes of the cladding tubes, thereby making them to vibrate at a superposition of the excited mechanical modes. The vibrations of the cladding tubes, heated up to several hundreds of degrees due to white light generation, result in temporal and permanent deformation of the cladding tubes, and thus a deformed inner cladding waveguide structure.

Since the inner cladding waveguide structure is used as the light guidance mechanism such that radiation is confined predominantly inside the hollow core, a deformed inner cladding waveguide structure will result in loss of light, and in some severe cases, fiber damage. Figure 8 shows two cross-section images taken at two different locations of a HC-PCF with a single-ring design operated with Krypton as the sole filling gas: (a) the cross-section image taken at the fiber end; (b) the cross-section image taken at a location a few centimeters away from the fiber end shown in (a). It can be seen that the fiber tubes can be deformed along the fiber when exposed to a spatially-extended region of white light generation.

Furthermore, there are several other factors which can exacerbate the acoustic wave induced mechanical deformation of the fiber cladding structure (e.g., glass tubes). First, in the case of using a working gas with a low thermal conductivity, the poor thermal management of the fiber results in (over)heated cladding tubes which makes them more susceptible to mechanical deformations.

In addition, the impact of the generated acoustic waves to the fiber cladding structure can be significantly amplified if the repetition rate of the pump pulses in a way reinforces and amplifies the amplitude of the excited mechanical modes of cladding tubes, e.g. when it is close to the resonance frequencies of the excited mechanical modes of cladding tubes. As mentioned above, while a pump pulse is being nonlinearly broadened to a broadband or supercontinuum pulse within the hollow core of a HC-PCF, an acoustic (or pressure) wave is also excited as a result of sudden release of energy to the gas and heating it. In tube-type HC-PCFs such as the prior-art designs shown in Figure 7(a) and Figure 7(b), at least some of the glass tubes will act as acoustic resonators upon impingement of the generated acoustic waves. Within each glass tube acoustic resonator, interference can be formed between the incident and back-reflected acoustic waves. Hence, each acoustic resonator will have a resonance frequency which is predominantly determined by the tube geometry, e.g., shape, diameter, wall thickness. When the repetition rate of the pump pulses is close or matches to a resonance frequency of the glass tubes, a resonance effect will occur which significantly enhances the amplitude of the mechanical vibrations of the associated tubes.

It is known that the fiber cladding deformation issue can be mitigated by adding a certain amount of Hydrogen to the working gas or gas mixture. At present, a typical mole fraction of Hydrogen in a Hydrogen containing filling gas mixture is around 2%.

Studies have revealed that the fiber cladding deformation issue is at least partly related to radiation-induced defects (color centers) in glass. Such defects when formed by exposing glass to UV photons could cause local mechanical stress and eventual deformation of the thin glass structure (e.g., the fiber cladding structure). Hydrogen and Deuterium are known to be useful for healing such defects in a glassy matrix.

Moreover, mixing a small amount of Hydrogen with a working gas is also found to be effective in damping the acoustic waves generated in a HC-PCF. Studies have revealed that gas mixtures can allow damping of the generated acoustic waves, due to diffusion-assisted acoustic wave attenuation. Both atomic and molecular gases can be used to mix with a commonly used working gas, e.g., Krypton. As molecular gases have more internal degrees of freedom, they are more effective in acoustic damping than atomic gases. In other words, the vibrational and rotational relaxations in molecular gases improve the acoustic damping capability due to the coupling between molecular degrees of freedom, e.g., translational, rotational, and vibrational degrees of freedom. Molecular gases that are suitable for mixing with a working gas can be, for example, Methane, Nitrogen, Oxygen or Hydrogen.

However, the inventors have discovered that a mixture of atomic gases can still provide considerable acoustic damping. It is proposed, therefore, to use atomic gas mixtures which improve acoustic wave damping with respect to a single working atomic gas. Such mixtures may comprise, for example, noble gas mixtures such as a mixture of Krypton and Helium, a mixture of Krypton and Neon, or a mixture of Xenon and Helium.

For a gas mixture with fixed concentrations of gas constituents, the amplitude damping of the generated acoustic wave is described by the equation below:

$$A(f) = A_0 * e^{(-\alpha(f)*z)} \qquad [1]$$

where f is the frequency, $\alpha(f)$ is the frequency dependent damping coefficient, and z is the propagation distance from the origin of the acoustic wave (e.g., the middle of the fiber core). Since the acoustic waves are successively generated by a train of pump pulses with a certain repetition rate/frequency $f_{pr}$, it would be therefore desirable, and proposed herein, to use a gas mixture in which the peak of the damping curve, corresponding to an optimal acoustic damping frequency, is matched or substantially close to the repetition rate $f_{pr}$ of the pump laser in order to have the maximum damping at that frequency. For a fixed mixture, one could also tune the $f_{rp}$ away from the resonance frequencies.

Although the mixing of a small amount of Hydrogen with a working gas was proposed and used to mitigate the fiber cladding deformation issue, the present inventors now appreciate that the introduction of Hydrogen also helps mitigate the aforementioned thermal issue. This insight has not been appreciated before.

At present, Krypton is often used in existing HC-PCF based broadband light sources as the working gas. Note that, the working gas or gas mixture refers to the gas or gas mixture that is predominantly responsible for interacting with the input pump radiation and consequently generating of broadband radiation. The filling gas used in a HC-PCF based broadband light source may comprise only a working gas or gas mixture. Or alternatively, the filling gas may comprise a working gas or gas mixture and one or more other gases. The thermal conductivity of Krypton is about 9.5 milliwatt per milliKelvin (mW/mK) at room temperature. This low thermal conductivity results in poor thermal management in HC-PCFs. In other words, a bare HC-PCF which is enclosed in a gas cell and embedded in Krypton cannot efficiently dissipate heat generated during white light generation. This is particularly true and of importance for the inner surfaces of the fiber cladding structure that are in direct contact with broadband radiation. Since low thermal conductivity is a characteristic of most gaseous media, the aforementioned thermal problem is therefore a common issue for all those gases. The thermal conductivity of Hydrogen is 186.9 mW/mK which is at least an order of magnitude higher than the commonly used working gas, e.g., Krypton. A much higher thermal conductivity is helpful in improving thermal dissipation of a HC-PCF and consequently suppressing the aforementioned fiber overheating issue.

Although the addition of Hydrogen into a working gas can successfully mitigate the aforementioned problems of HC-PCF based broadband light sources, this method on the other hand causes surface reduction and glassy growth issue which is also detrimental to the performance, in particular the lifetime of a HC-PCF based light source. It has been found that after operating a HC-PCF based light source with a Hydrogen containing gas mixture for over a few hundred hours, silicon oxides or $SiO_x$ nanostructures and fluffy glass are grown predominantly at the output tip of the fiber. One of the main root causes of the silicon dioxide growth is reduction of the inner fiber surfaces in the presence of hydrogen plasma. Reduction and etching of silicon dioxide in the presence of hydrogen plasma is a known phenomenon. Hydrogen ions and radicals, such as atomic hydrogen, attack the inner fiber surfaces and cause the reduction of the contacting surfaces by converting silica to silicon, or cause etching of the surfaces by creating volatile silicon monoxide. The growth of silicon dioxide at the end tip of a fiber results in gradual blockage and loss of output power, which will eventually lead to fiber damage and short lifetime of the white light source. In addition to the surface reduction and glassy growth issue, the above mentioned 2% mole fraction of Hydrogen is only an empirical value and the exact amount of Hydrogen needed to minimize or prevent cladding structure deformation remains unknown.

To address some or all of these issues, therefore, a method for improving the lifetime of a gas filled HC-ARF based broadband light source is proposed. The proposed method is particularly suitable for extending the lifetime of a HC-PCF when operated in a gas environment for white light or supercontinuum generation. Different embodiments of the proposed method and associated apparatus will be disclosed below. One commonality shared between the disclosed embodiments is that the use of Hydrogen for mitigation of fiber lifetime limiting issues is obviated. As such, it is proposed that the filling gas used is one which comprises no more than 10 parts-per-million (ppm) Hydrogen in mole fraction. For example, the only Hydrogen comprised in the filling gas may be that which is naturally present (e.g., native Hydrogen which may result from outgassing of materials, hydrocarbons, $H_2O$ on any surface and/or generated as part of the broadband generation process) as opposed to intentionally added Hydrogen.

As illustrated in Figure 9, a broadband light source device 100 comprises a pump laser 110 outputting a train of pump pulses 111, an optical component 120 spectrally broadening the input pump pulse and an optical diagnostic device 130 measuring the output broadband spectrum. The optical component 120 comprises a HC-PCF (e.g., a HC-ARF) 101 having a specific fiber length and a gas cell 102 filled with a filling gas or a gas mixture at a specific pressure or with a pressure distribution. The gas cell 102 further comprises an input optical window 103a and an output optical window 103b, located at respective ends of the gas cell 102. The input optical window 103a is operable to admit ultrashort pump laser pulses into the gas cell 102 via the window. After being coupled into the gas-filled HC-PCF 101, pump laser pulses 111 propagate along the fiber where they experience significant spectral broadening. Resultant broadband laser pulses are subsequently discharged from the gas cell 102 via the output optical window 103b and measured by the optical diagnostic device 130 (e.g. a spectrometer).

To fill the HC-PCF 101 with a filling gas, the gas cell 102 may be in communication with a pressurized gas supply or reservoir (not shown). The inner surfaces of the walls and windows 103a, 103b of the gas cell 102 enclose a cavity. The axis of the gas cell is parallel to the axis of the HC-PCF 101.

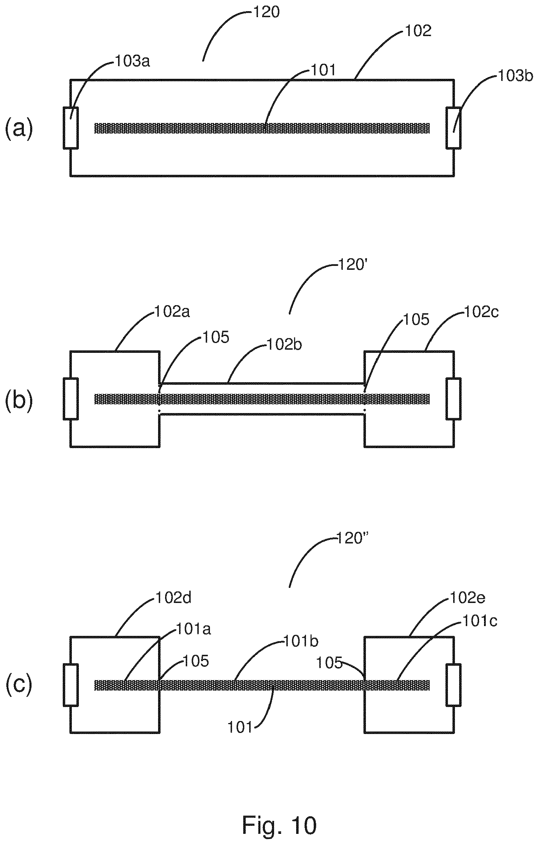

Figures 10(a)-(c) schematically depicts three known configurations of the optical component 120, 120', 120". Figure 10(a) illustrates a first configuration where the entire HC-PCF 101 is comprised within a single gas cell 102. Figure 10(b) illustrates an alternative arrangement where the entire HC-PCF 101 is comprised in several (e.g., three) sub-cells 102a, 102b, 102c which are interconnected by using an appropriate sealing mechanism 105. The pressure-tight connections ensure all the sub-cells to reach the same pressure desired for white light generation. Figure 10(c) illustrates another configuration where the two fiber ends 101a, 101c of the HC-PCF 101 are comprised in two separate gas cells 102a,102c respectively, while a central portion 101b of the fiber, acting as a fluid connection, is comprised outside of the gas cells.

Note that the configurations of the optical component 120, 120', 120" illustrated in Figure 10(a)-(c) are only three examples. Many other different configurations are equally applicable. For example, in some embodiments, the optical component 120 may not use a single gas cell 102 or multiple sub-cells 102a-e to create a gas environment that at least partially encloses the HC-PCF 101. Instead, the HC-PCF 101 may be first filled with a filling gas and then sealed; for example, by attaching a mirror to each of the two ends of the fiber. In this way, the filling gas is kept within the fiber (e.g., the hollow core and cladding structure) without the need for a separate gas cell. The two mirrors may be configured in the same way as the mirrors illustrated in Figure 9 in terms of allowable transmission bands.

In an embodiment, the filling gas of a HC-PCF based broadband light source may be a gas mixture comprising or consisting of Helium and another gas or gas mixture. In the embodiment, Helium may act as an alternative gas to Hydrogen which is currently used to mitigate the cladding structure deformation and fiber overheating issues. Similar to Hydrogen, Helium has a high thermal conductivity, i.e., 156.7 mW/mK, and can therefore help to improve thermal management of a HC-PCF 101. Although a different molecular gas with a high thermal conductivity may also be used to replace Hydrogen for the same purposes (described in the embodiments below), atomic gases are preferred due to for example the fact that molecular gases, such as Hydrogen, Oxygen, and $H_2O$, will dissociate after being exposing by light and turn into ions and radicals which subsequently attack glass and cause the surface reduction issue.

The second gas or gas mixture may act as the working gas for white light generation. The second gas or gas mixture may be either an atomic gas or gas mixture or a molecular gas or gas mixture. As described above, a mixture of two or more atomic gases can help damp the generated acoustic waves and therefore mitigate the cladding structure deformation issue. Note that, in order to provide effective shock absorbing or acoustic damping properties, the two or more atomic gases of the filling gas mixture should have sufficiently different atomic masses required by diffusion assisted acoustic wave attenuation.

In some embodiments, the filling gas mixture may comprise or consist of Helium and a second atomic gas used for white light generation. The second atomic gas may be, for example, Krypton, Neon, Argon, or Xenon. In other embodiments, the filling gas mixture may comprise or consist of Helium and a second atomic gas mixture. The second atomic gas mixture used for white light generation may comprise at least another two different atomic gases, e.g., Krypton and Neon, Krypton and Argon, or Krypton and Xenon.

In different embodiments, the filling gas mixture may comprise or consist of Helium, a second atomic gas or gas mixture and a molecular gas or gas mixture. The second atomic gas or gas mixture may be used as the working gas or gas mixture for white light generation. Since molecular gases have more internal degrees of freedom than atomic gases, when mixing with Helium containing atomic gas mixtures such as those in foregoing embodiments, they can further enhance acoustic damping capability. In some embodiments, the filling gas mixture may comprise Helium, a second atomic gas or gas mixture and a molecular gas. The molecular gas for this purpose may be, for example, Nitrogen, Oxygen or $H_2O$. In other embodiments, the filling gas mixture may comprise Helium, a second atomic gas or gas mixture and a molecular gas mixture. The molecular gas mixture may comprise for example, two or more of Nitrogen, Oxygen or $H_2O$.

In some embodiments, the filling gas mixture may comprise or consist of Helium and a different gas or gas mixture. Here, Helium may be used to mitigate the fiber overheating issue and the cladding structure deformation issue. The different gas or gas mixture used as the working gas or gas mixture may be carefully chosen to determine one or more desired properties, e.g., spectral range and spectral profile, for broadband radiation generation in a gas filled HC-PCF based light source. For example, by properly choosing the type of the gas or the composition of the gas mixture, it may be possible to generate broadband radiation predominantly in ultraviolet (UV) region or infrared (IR) region. In the case where a broadband UV spectrum is preferred, the filling gas mixture may comprise or consist of Helium and a molecular gas or gas mixture comprising Nitrogen, or an atomic gas such as Argon or Krypton, for example. Whereas, in the case where a broadband IR spectrum is preferred, the filling gas mixture may comprise or consist of for example Helium and Xenon.

According to equation [1], the strength of acoustic damping of pressure shock waves is dependent on the pump pulse repetition rate. Therefore, in an embodiment, a Helium containing filling gas mixture may be configured such that the optimal acoustic damping frequency is matched or substantially close to the repetition rate of the pump pulses. In some embodiments, the repetition rate of the pump laser may be tuned to match or be substantially close to the optimal acoustic damping frequency of the filling gas or gas mixture. In other embodiments, a suitable filling gas or gas mixture with an optimal acoustic damping frequency that is matched or substantially close to the pump pulse repetition rate may be selected.

The pump-gas frequency matching feature may be used alone or in combination with any foregoing embodiment(s) in order to maximize the acoustic damping strength of the corresponding filling gas mixture. For example, in an embodiment, the filling gas mixture comprising or consisting of Helium and Nitrogen may have an optimal acoustic damping frequency that is exactly matched to the repetition rate of pump pulses. As such, the gas filled HC-PCF based light source can simultaneously generate broadband UV radiation (determined by Nitrogen) and have an extended fiber lifetime with minimized impact from the fiber overheating (e.g., mitigated by using Helium) and cladding tube deformation (mitigated by using a mixture of Nitrogen and Helium together with the pump-gas frequency matching feature) issues.

Since the acoustic resonance effect induced by the cladding structure, e.g., cladding tubes, can amplify the impact of the acoustic waves, it is also preferable to ensure the pump pulse repetition rate is different to one or more resonance frequencies of the excited resonant modes within the cladding structure (e.g., cladding tubes) of the HC-PCF 101. In some embodiments, the repetition rate of the pump laser may be tunable such that the resonance effect can be avoided. Alternatively, acoustic impedance of the HC-PCF 101, as seen by the acoustic waves generated during white light generation, may be configured to substantially prevent excitation of resonant modes within the cladding structure of the HC-PCF 101 after being impinged by the acoustic waves. In some embodiments, the prevention of excitation of resonant modes within the cladding structure may be obtained by carefully selecting a suitable gas composition for the filling gas mixture and/or by carefully selecting a HC-PCF 101 with a suitable fiber geometry.

Similar to the pump-gas frequency matching feature, the above described pump-cladding anti-resonance feature may be used alone or in combination with any foregoing embodiment(s). For example, in a different embodiment, the pump-cladding anti-resonance feature may be applied to the above embodiment where the filling gas comprises or consists of Helium and Nitrogen and the optimal acoustic damping frequency matches to the pump pulse repetition rate. This embodiment can ensure the maximized acoustic damping strength is not compromised by the resonance effect of the cladding tube.

In some embodiments, a certain thermal management measure may be taken to improve the thermal dissipation of the gas cell 102. A gas cell 102 with improved thermal dissipation may facilitate effective removal of the heat transferred from the HC-PCF 101 to the gas cell 102 via the Helium containing filling gas or gas mixture. In some embodiments, the gas cell 102 may be connected to an efficient cooling system that can quickly remove heat from the gas cell body. In different embodiments, the gas cell 102 may be built with materials with high thermal conductivities. Again, the improved gas cell 102 with higher thermal dissipation may be used in combination with any foregoing embodiment(s).

In all of the above embodiments, the filling gas mixture contains a certain amount of Helium. In comparison to Hydrogen containing filling gas mixtures, Helium containing filling gas mixtures not only mitigate the fiber overheating and cladding structure deformation issues but also prevents the surface reduction issue that is otherwise present when using Hydrogen containing filling gas mixtures. It should be appreciated that even without intentionally introducing Hydrogen, the filling gas or gas mixture may still comprise minute amounts of Hydrogen, which could come from outgassing, hydrocarbons, or $H_2O$ on any surface and/or generated as part of the broadband generation process. However, such residual or naturally present Hydrogen is insufficient to act to mitigate any of the aforementioned problems or to cause glass surface reduction.

In an embodiment, the filling gas mixture may consist of 50% Helium and 50% Krypton in mole fractions. However, other mole fractions of Helium may also be applicable. The mole fraction of Helium may be or greater than 2% of the filling gas mixture; e.g., equal to or greater than 10% or 50% of the filling gas mixture. For example, the mole fraction of Helium may be between 10% and 90%, between 20% and 80%, between 30% and 70%, between 40% and 60%, between 45% and 55%, or between 55% and 65%; and more specifically it may be: 2%, 10%, 20%, 30%, 40%, 50%, 60%, 70% or 80% of the filling gas mixture. In the above, "comprises" describes including these gasses, but not necessarily to the exclusion of other gases and "consists of "describes comprising only these gases.

Although Helium (or another noble gas) is a very useful gas medium and can mitigate both the fiber overheating and cladding structure deformation issues, some embodiments may use a filling gas mixture that does not comprise Helium. In some embodiments, one or more of the pump-gas frequency matching feature, the pump-cladding anti-resonance feature and the thermally dissipated gas cell feature may be applied to a filling gas or gas mixture that does not comprise Helium. In an embodiment, all of the above three features are used with a filling gas mixture that does not comprise Helium. Since the pump-gas frequency matching feature and the pump-tube anti-resonance feature can mitigate the cladding tube deformation issue and the thermally dissipated gas cell feature can mitigate the fiber overheating issue, the fiber lifetime can still be extended even when no Helium is used. The embodiment may further prevent the surface reduction issue by avoiding using Hydrogen in the filling gas mixture.

As such, a method for optimizing the repetition rate of the pump radiation such that it is unmatched to any of the acoustic resonance frequencies of an inner cladding structure of the HC-PCF, and a method for substantially matching an optimal acoustic damping frequency of the gas medium to a repetition rate of the pump radiation generated by the pump radiation source are also envisaged. The optimizing or matching may be achieved, for example, by suitable tuning of the pump radiation parameters, optimization of the gas mixture or both.

The HC-PCF 101 used in such an embodiment is a HC-ARF which may employ the Kagome design or the single-ring design with reference to Figure 7. Alternatively, other fiber designs (not shown) such as inhibited coupling designs, hypocycloid-core Kagome, and nested tubular designs may be used. The pump pulse duration may be chosen to be greater than 100fs, and more specifically within the range of: 100fs to 100ps, 100fs to 30ps or 100fs to 1ps for example. The chosen pump pulse may be 100fs, 150fs, 200fs, 250fs, 300fs, 350fs, 400fs, 450fs, 500fs, 600fs, 700fs, 800fs, 900fs, 1ps, lOps, 20ps, 30ps, 100ps. The pump wavelength may be chosen from the visible regime, near-IR regime or mid-IR regime. The pump laser pulses may have a repetition frequency of several-hundred hertz (Hz), kilohertz (kHz), or megahertz (MHz). In particular the repetition rate may be chosen to be in the range of 300 kHz to 100 MHz, such as 300 kHz, 500 kHz, 1 MHz, 5 MHz, 10MHz, 20 MHz, 30 MHz, 40 MHz.

A broadband light source device configured to extend lifetime of a HC-PCF as disclosed herein, comprises a Helium containing filling gas mixture.

A broadband light source device configured to extend lifetime of a HC-PCF as disclosed herein, wherein the pump pulse repetition rate and the optimal acoustic damping frequency of the filling gas mixture are matched or substantially close to each other.

A broadband light source device configured to extend lifetime of a HC-PCF as disclosed herein, comprises an optical component which may be configured to any one of the configurations with reference to Figure 10.

Further embodiments of are disclosed in the list of numbered clauses below:

1. A broadband light source device, being configured for generating a broadband output upon receiving pump radiation, comprising:

an optical component, comprising:

a hollow-core photonic crystal fiber (HC-PCF) ; and
a gas mixture filling said HC-PCF;

wherein said gas mixture comprises a mixture of at least one first gas configured for the generation of broadband radiation and at least one second gas configured to improve thermal conductivity of said gas mixture and/or provide acoustic damping of shock waves initiated during said generation of broadband radiation, further wherein said gas mixture comprises no more than 10 parts-per-million (ppm) Hydrogen in mole fraction.

2. A broadband light source device according to clause 1, wherein said at least one second gas comprises or consists of an atomic gas.

3. A broadband light source device according to clause 2, wherein said at least one second gas comprises or consists of Helium.

4. A broadband light source device according to clause 2 or 3, wherein said at least one first gas comprises or consists of an atomic gas having a greater atomic weight than said second gas.

5. A broadband light source device according to clause 4, wherein said at least one first gas comprises or consists of one or more of: Krypton, Xenon, Argon, Neon.

6. A broadband light source device according to any preceding clause, wherein said at least first gas comprises or consists of one or more molecular gases.

7. A broadband light source device according to any preceding clause, wherein said at least one second gas comprises or consists of one or more molecular gases.

8. A broadband light source device according to clause 7, wherein said one or more molecular gases are selected from the range: Nitrogen, Oxygen, $H_2O$.

9. A broadband light source device according to any preceding clause, wherein said second gas constitutes at least 2% of the gas mixture in mole fraction.

10. A broadband light source device according to any of clauses 1 to 8, wherein said second gas constitutes at least 10% of the gas mixture in mole fraction.

11. A broadband light source device according to any of clauses 1 to 8, wherein said second gas constitutes between 30% and 70% of the gas mixture in mole fraction.

12. A broadband light source device according to any of clauses 1 to 8, wherein said second gas constitutes between 40% and 60% of the gas mixture in mole fraction.

13. A broadband light source device according to any preceding clause, wherein said HC-PCF comprises a single ring HC-PCF.

14. A broadband light source device according to any preceding clause, further comprising a pump radiation source for generating said pump radiation.

15. A broadband light source device according to clause 14, wherein an optimal acoustic damping frequency of the gas mixture is substantially matched to a repetition rate of the pump radiation generated by the pump radiation source.

16. A broadband light source device according to clause 15, wherein the gas composition of the gas mixture is configured for said matching of the optimal acoustic damping frequency of the gas mixture to the repetition rate of the pump radiation.

17. A broadband light source device according to clause 15 or 16, being configured to tune the repetition rate of the pump radiation to match the optimal acoustic damping frequency of the gas mixture.

18. A broadband light source device according to any of clauses 14 to 17, wherein the pump radiation source is configured such that the repetition rate of the pump radiation is unmatched with any of acoustic resonance frequencies of an inner cladding structure of the HC-PCF.

19. A broadband light source device according to any preceding clause, wherein an inner cladding structure of the HC-PCF comprises one or more silica tubes.

20. A broadband light source device according to any preceding clause, wherein the gas mixture is configured to define a spectral range of the generated broadband radiation.

21. A broadband light source device according to any preceding clause, wherein said broadband output comprises a wavelength range of 200nm to 3000nm, or a sub-range within this range such as 400-2000 nm.

22. A metrology device comprising a broadband light source device according to any preceding clause.

23. A metrology device according to clause 22, comprising a scatterometer metrology apparatus, a level sensor or an alignment sensor.

24. A method for configuring a source arrangement configured for generating a broadband radiation output and comprising:

> a pump radiation source for outputting pump radiation; and
> a hollow-core photonic crystal fiber (HC-PCF)
> a gas mixture filling the HC-PCF, wherein the method comprises:
> substantially matching an optimal acoustic damping frequency of the gas medium to a repetition rate of the pump radiation generated by the pump radiation source.

25. A method according to clause 24, comprising optimizing a gas composition of the gas medium to match the optimal acoustic damping frequency of the gas medium to the repetition rate of the pump radiation.

26. A method according to clause 24 or 25, comprising tuning the repetition rate of the pump radiation to match the optimal acoustic damping frequency of the gas medium.

27. A method according to any of clauses 24 to 26, comprising optimizing the repetition rate of the pump radiation such that it is unmatched to any of the acoustic resonance frequencies of an inner cladding structure of the HC-PCF.

28. A method for configuring a source arrangement configured for generating a broadband radiation output and comprising:

> a pump radiation source for outputting pump radiation; and
> a hollow-core photonic crystal fiber (HC-PCF)
> a gas mixture filling the HC-PCF, wherein the method comprises:
> optimizing the repetition rate of the pump radiation such that it is unmatched to any of the acoustic resonance frequencies of an inner cladding structure of the HC-PCF.

29. A method according to any of clauses 24 to 28, wherein the gas mixture comprises at least one first gas and at least one second gas, wherein said at least one first gas is configured for the generation of broadband radiation and said at least one second gas is configured to improve thermal conductivity of said gas mixture and/or provide acoustic damping of shock waves initiated during said generation of broadband radiation, further wherein said gas mixture comprises no more than 10 parts-per-million (ppm) Hydrogen in mole fraction .

30. A method according to clause 29, wherein said second gas comprises an atomic gas.

31. A method according to clause 30, wherein said second gas comprises Helium.

32. A method according to clause 30 or 31, wherein said first gas comprises an atomic gas having a greater atomic weight than said second atomic gas.

33. A method according to clause 32, wherein said first atomic gas is selected from the range: Krypton, Xenon, Argon, Neon.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A broadband light source device, being configured for generating a broadband output upon receiving pump radiation, comprising:

    an optical component, comprising:

       a hollow-core photonic crystal fiber (HC-PCF) ; and
       a gas mixture filling said HC-PCF;

    wherein said gas mixture comprises a mixture of a first gas configured for the generation of broadband radiation and at least one second gas, different from the first gas, configured to improve thermal conductivity of said gas mixture and/or provide acoustic damping of shock waves initiated during said generation of broadband radiation, further wherein said second gas comprises or consists of: i) an atomic gas having a smaller atomic weight than said first gas; and/or ii) a molecular gas providing no more than 10 parts-per-million (ppm) Hydrogen in mole fraction to the gas mixture.

2. A broadband light source device as claimed in claim 1, wherein said first gas comprises or consists of one or more of: Krypton, Xenon, Argon, Neon.

3. A broadband light source device as claimed in claim 1 or 2, wherein said second gas comprises or consists of Helium.

4. A broadband light source device as claimed in any preceding claim, wherein said second gas comprises or consists of one or more molecular gases selected from the range: Nitrogen, Oxygen, $H_2O$.

5. A broadband light source device as claimed in any preceding claim, wherein said second gas constitutes at least 2% of the gas mixture in mole fraction.

6. A broadband light source device as claimed in claim 5, wherein said second gas constitutes between 10% and 70% of the gas mixture in mole fraction.

7. A broadband light source device as claimed in any preceding claim, wherein said HC-PCF comprises a single ring HC-PCF.

8. A broadband light source device as claimed in any preceding claim, further comprising a pump radiation source for generating said pump radiation.

9. A broadband light source device as claimed in claim 8, wherein an optimal acoustic damping frequency of the gas mixture is substantially matched to a repetition rate of the pump radiation generated by the pump radiation source.

10. A broadband light source device as claimed in claim 9, wherein the gas composition of the gas mixture is configured for said matching of the optimal acoustic damping frequency of the gas mixture to the repetition rate of the pump radiation.

11. A broadband light source device as claimed in claim 9 or 10, being configured to tune the repetition rate of the pump radiation to match the optimal acoustic damping frequency of the gas mixture.

12. A broadband light source device as claimed any of claims 9 to 11, wherein the pump radiation source is configured such that the repetition rate of the pump radiation is unmatched with any of acoustic resonance frequencies of an inner cladding structure of the HC-PCF.

13. A broadband light source device as claimed in any preceding claim, wherein said broadband output comprises a wavelength range of 200nm to 3000nm, or a sub-range within this range such as 400-2000 nm.

14. A broadband light source device according to any preceding claim, wherein an inner cladding structure of the HC-PCF comprises one or more tubes.

**EP 3 936 936 A1**

15. A broadband light source device according to any preceding claim, wherein the gas mixture is configured to define a spectral range of the generated broadband radiation.

Fig. 1

Fig. 2

LA

SC1

SC3

CL

MT

SC2

0

-1

+1

Fig. 3

SM1

2

4

PU

Z

X

W

I

6

λ

Z

8

X

Fig. 4

Fig. 5

Fig. 6

Fig. 7

Fig. 8

Fig. 9

Fig. 10

Europäisches
Patentamt

European
Patent Office

Office européen
des brevets

# EUROPEAN SEARCH REPORT

Application Number

EP 20 18 4730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/127266 A1 (MAX PLANCK GES ZUR [DE]) 12 July 2018 (2018-07-12) * page 19, paragraph 1 * * abstract * ----- | 1-15 | INV. G02F1/355 G02F1/383 |
| X | EP 3 647 874 A1 (ASML NETHERLANDS BV [NL]) 6 May 2020 (2020-05-06) * paragraphs [0043], [0044] * * abstract * ----- | 1-15 | |
| X | WO 2020/083624 A1 (ASML NETHERLANDS BV [NL]) 30 April 2020 (2020-04-30) * paragraphs [0044], [0047]; figure 8 * ----- | 1-15 | |

TECHNICAL FIELDS
SEARCHED      (IPC)

G02F

The present search report has been drawn up for all claims

| Place of search | Date of completion of the search | Examiner |
|---|---|---|
| The Hague | 25 November 2020 | Gill, Richard |

**EP 3 936 936 A1**

## ANNEX TO THE EUROPEAN SEARCH REPORT
## ON EUROPEAN PATENT APPLICATION NO.

EP 20 18 4730

25-11-2020

| Patent document cited in search report | | Publication date | Patent family member(s) | | Publication date |
|---|---|---|---|---|---|
| WO 2018127266 | A1 | 12-07-2018 | CN | 110537144 A | 03-12-2019 |
| | | | EP | 3566097 A1 | 13-11-2019 |
| | | | JP | 2020514785 A | 21-05-2020 |
| | | | KR | 20190100404 A | 28-08-2019 |
| | | | US | 2019319420 A1 | 17-10-2019 |
| | | | US | 2020280159 A1 | 03-09-2020 |
| | | | WO | 2018127266 A1 | 12-07-2018 |
| EP 3647874 | A1 | 06-05-2020 | NONE | | |
| WO 2020083624 | A1 | 30-04-2020 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- US 20160161863 A
- US 20160370717 A1
- US 7265364 B
- US 7646471 B
- US 2010233600 A1
- WO 2016102127 A1
- US 6961116 B
- US 2015261097 A1
- US 2004175085 A
- EP 3136143 A1
- WO 2018127266 A1
- US 9160137 B1